# EUROPÄISCHE PATENTSCHRIFT

(11) **EP 4 514 887 B1**
(45) Veröffentlichungstag und Bekanntmachung des Hinweises auf die Patenterteilung: **28.01.2026**
(21) Anmeldenummer: 23717399.2
(22) Anmeldetag: 04.04.2023
(51) Int. Cl.: C08K 5/3492, C08K 5/5313, B32B 27/12

(54) **WÄSSRIGE DISPERSIONEN ZUR HERSTELLUNG VON FLAMMGESCHÜTZTEN GESCHÄUMTEN FOLIEN UND DAMIT AUSGERÜSTETEN VERBUNDGEBILDEN**
AQUEOUS DISPERSIONS FOR PRODUCING FLAME-RETARDANT FOAMED FILMS AND FOR PRODUCING COMPOSITE STRUCTURES EQUIPPED THEREWITH
DISPERSIONS AQUEUSES PERMETTANT LA PRODUCTION DE FILMS EXPANSÉS RETARDATEURS DE FLAMME ET LA PRODUCTION DE STRUCTURES COMPOSITES QUI EN SONT ÉQUIPÉES

(30) Priorität: 29.04.2022 DE 102022204206
(43) Veröffentlichungstag der Anmeldung: 05.03.2025
(73) Patentinhaber: Benecke-Kaliko AG, 30419 Hannover (DE)
(72) Erfinder: GERKEN, Andreas, 30419 Hannover (DE); ROHN, Mathias, 30419 Hannover (DE); SONNENSCHEIN-BATTEFELD, Christoph, 30419 Hannover (DE)
(74) Vertreter: Preusser, Andrea
(86) Internationale Anmeldenummer: PCT/DE2023/200072
(87) Internationale Veröffentlichungsnummer: WO 2023/208298

(56) Entgegenhaltungen:
- EP-A1- 3 929 232
- WO-A1-2012/076905
- WO-A1-2015/128213

## Beschreibung

Die vorliegende Erfindung betrifft wässrige Polymerdispersionen, die ein dispergiertes Polymer, einen Schaumstabilisator und ein Flammschutzmittelgemisch, das Melamincyanurat und ein Aluminiumphosphinat enthält, umfasst. Die vorliegende Erfindung betrifft weiterhin Verbundgebilde mit mehreren Schichten, von denen mindestens eine Schicht durch Verfestigung einer wässrigen Polymerdispersion gemäß der Erfindung erhältlich ist, und die Verwendung einer Flammschutzmittelkombination, die Melamincyanurat und ein Aluminiumphosphinat, enthält, zur Verminderung des Dickenschrumpfes einer verfestigten Schaumschicht, die aus der erfindungsgemäßen Polymerdispersion gebildet ist.

### Stand der Technik

Als Lederersatz bzw. als Material zum Verpolstern von Möbeln und Automobilbauteilen, oder auch für die Herstellung von Taschen, Schuhen etc. werden häufig Flächenmaterialien verwendet, die mindestens eine Polyurethanschicht aufweisen. Diese Flächenmaterialien haben in der Regel eine dekorative Oberflächenstruktur oder Narbung, die als geometrische Struktur oder mit einer lederähnlichen Optik ausgebildet ist. In diesem Fall sind die Flächenmaterialien als Kunstleder ausgebildet, d.h. sie sehen zwar aus wie Leder, basieren aber nicht auf tierischer Haut.

Derartige Polyurethan-Kunstleder werden häufig wegen ihrer angenehmen Haptik verwendet und lassen sich auf der Sichtseite meist nur schwierig von Leder unterscheiden. Da die Qualität von Leder von Haut zu Haut schwankend ist, die Verfügbarkeit von Leder mit ausreichender Qualität für Dekorzwecke begrenzt, der Preis von Leder vergleichsweise hoch ist und von den Verbrauchern zunehmend "tierfreie" (vegane) Produkte gefordert werden, werden in den letzten Jahren mehr und mehr Kunstleder als Ersatz für Leder nachgefragt und verwendet.

Kunstleder auf Polyurethanbasis werden häufig unter Verwendung von Lösungsmitteln und lösungsmittelbasierten Rohstoffen hergestellt. Weit verbreitet ist hier immer noch die Herstellung von koagulierten Polyurethan-Kunstledern unter Verwendung des toxischen N,N-Dimethylformamid. Auch andere Lösungsmittel werden noch häufig verwendet, die aber speziell für automobile Anwendungen nur noch in Spuren im Endprodukt nachweisbar sein dürfen. Die Verwendung dieser Lösungsmittel wird auch für die am Herstellungsprozess beteiligten Arbeiter und für die Umwelt kritisch gesehen.

Als Mittel zur Reduzierung von Lösungsmittelemissionen sind sogenannte High-Solid-Polyurethansysteme bekannt, die aber in der Regel zur Steuerung der Herstellreaktion ein Blockierungsmittel zur Verminderung der Reaktivität der eingesetzten Isocyanate enthalten. Diese Blockierungsmittel (z.B. 2-Butanonoxim) verbleiben häufig mindestens anteilsmäßig im Endprodukt, was zu einem unangenehmen Geruch und erhöhten VOC (volatile organic compound)-Wert führt. Zudem sind diese Blockierungsmittel in vielen Ländern als toxikologisch bedenklich eingestuft.

Wegen des im Vergleich zu Leder und Polyurethan-Kunstledern deutlich geringeren Preises werden auch große Mengen von PVC-basierten Kunstledern verwendet. Diese müssen jedoch mit einem relevanten Gehalt an Weichmachern hergestellt werden, die seit Jahren in der öffentlichen Diskussion stehen und deren Verwendung zunehmend kritischer gesehen wird.

Die Verwendung von Weichmachern wurde in den letzten Jahren immer mehr beschränkt, beispielsweise durch Reach-Regulierungen, die GADSL-Liste der Automobilhersteller, und Ähnlichem. Zudem sind Weichmacher in der PVC-Matrix nicht fest eingebunden, so dass sie über die Zeit aus der Polymermatrix herausmigrieren, wobei sich in der Folge die Flexibilitätseigenschaften eines PVC-Kunstleders verändern. Ein weiteres Problem besteht bei der längeren Einwirkung höherer Temperaturen, die bei Instrumententafelanwendungen im Automobil auftreten können; solche Einwirkungen können zu Verfärbungen und einem Nachlassen der mechanischen Stabilität führen, da aus dem PVC Salzsäure abgespalten wird und die PVC-Polymerketten zerstört werden.

Im Stand der Technik ist etabliert, dass zur Erzeugung einer angenehmen Berührhaptik und zu Vermeidung des Durchscheinens oder Durchdrücken einer Struktur eines eingesetzten Trägertextils eine geschäumte Schicht in solchen Kunstledern oder Verbundstrukturen in einer nicht oberflächlich sichtbaren Lage eingesetzt wird, die im Vergleich zu den anderen Schichten eine relative hohe Dicke besitzt.

In letzter Zeit werden zur Herstellung von Kunstledern zunehmend wässrige Polyurethan- und/oder Polyacrylatdispersionen eingesetzt. Diese sind in der Regel lösungsmittelarm oder lösungsmittelfrei. Allerdings bereitet die Herstellung von vergleichsweise dicken trockenen Filmen erhebliche Schwierigkeiten. Sind diese Schichten kompakt, ist eine ökonomisch schnelle Trocknung von dicken Schichten bei erhöhten Temperaturen ohne Blasenbildung durch verdampfendes Wasser oder andere Fehler in der Regel nicht möglich.

Beheben lässt sich dieser Nachteil, indem wässrige Dispersionen mit Schaumhilfsmitteln (Tensiden) versetzt und solche Schichten durch Aufschlagen mechanisch aufschäumt werden. Als Produkt werden in diesem Fall offenzellige Schaumschichten erhalten, die sich durch die große Oberfläche des Filmes schnell trocknen lassen. Solche Schäume werden z.B. in der EP 0235949 A1, EP-0246723 A2 , EP 3929232 A1 oder DE 10 2007 048 079 A1 beschrieben. Nachteilig an einer solchen Vorgehensweise ist jedoch, dass solche Schäume geringe Wandstärken und begrenzte mechanische Stabilitäten der Schaummizellen aufweisen und dadurch insbesondere unter mechanischer oder thermischer Belastung, wie sie beispielsweise bei Aufwickeln einer geschäumten Folie auf eine Rolle entsteht, oder bei Einwirkung von Wärme und Sonnenlicht im verbauten Zustand (z.B. auf einer Instrumententafel im Auto) eine nicht reversible Abnahme der Dicke auftritt.

Nachteilig an diesen Lösungen ist darüber hinaus, dass diese Schäume zur Darstellung von Kunstledern oder ähnlichen Verbundgebilden nicht ohne Weiteres eingesetzt werden können, da diese wegen gesetzlicher Anforderungen an die Flammhemmung solcher Materialien mit zusätzlichen Flammschutzmitteln ausgerüstet sein müssen. Die Zugabe solcher Flammschutzmittel darf nur in einer begrenzten Menge erfolgen, um das Aufschäumverhalten bei der Herstellung nicht zu behindern und es dürfen sich auch keine Agglomerate des Flammschutzmittels beim Einmischen bilden. Daneben darf das Flammschutzmittel auch die Endeigenschaften des Kunstleders bei Beanspruchung nicht signifikant verändern, so dass zum Beispiel bei einer längeren Wärmelagerung bei 100°C ein starker Schrumpf oder eine deutlich sichtbare Verfärbung des Kunstleders auftritt.

Des Weiteren darf durch das Flammschutzmittel auch der pH-Wert nicht so stark verändert werden, dass die Schaumhilfsmittel unwirksam werden und die Herstellung eines homogenen Schaumes nicht mehr möglich ist. Auch eine zu starke Erhöhung der Viskosität durch die Zugabe des Flammschutzmittels, die ein homogenes Aufschäumen unmöglich machen kann, muss vermieden werden. Daneben muss auch die Verwendung halogenierter Flammschutzmittel vermieden werden, da diese hinsichtlich Toxikologie und Umweltbelastung bedenklich sind.

In der EP 3 623 490 A1 werden flammhemmende Dispersionen beschrieben, die als Schlagschaum Verwendung finden. Die hier eingesetzten Dispersionen enthalten integrierte flammhemmende Bestandteile wie z.B. Phosphor-haltige Polyole, so dass zusätzliche Flammschutzmittel für eine flammhemmende Wirkung nicht erforderlich sind. Nachteilig an dieser Lösung ist es jedoch, dass solche Dispersionen in der Regel einen relativ niedrigen Festkörpergehalt von 30 - 35 % aufweisen, was ein Aufschäumen und effizientes Trocknen solcher Schäume schwierig macht, und dass solche Dispersionen in der Regel Co-Lösungsmittel wie N-Butyl-2-azacyclopentanone oder Neutralisationsmittel wie Amine enthalten, die nach der Verarbeitung als Emissionen aus dem Material entweichen können.

Bekannt ist auch die Erzeugung von Polyurethanschäumen aus Mischungen von Isocyanaten oder Isocyanat-Präpolymeren mit Polyolen und/oder Polyaminen und Wasser (siehe z.B. US 3,978,266, US 3,975,587 oder EP 0059048 A1). Solche reaktiven Mischungen erzeugen jedoch häufig eine nicht homogene Schaumstruktur, wie sie für hochwertige Kunstleder notwendig ist, und eine Handhabung im Herstellungsprozess für Kunstleder ist durch kurze Reaktionszeiten bzw. Topfzeiten sehr aufwändig.

Geschäumte Polyurethanschichten zur Verwendung In Kunstledern können weiterhin durch den Einsatz von chemischen Treibmitteln erzeugt werden, die einer Polyurethanmasse zugesetzt werden und sich bei Erwärmung unter Gasabgabe zersetzen. Derart erzeugte Schäume zeigen jedoch eine sehr inhomogene Schaumstruktur und sind in wässrigen Dispersionen nicht einsetzbar, da der Zersetzungspunkt der üblichen chemischen Treibmittel oberhalb der Siedetemperatur von Wasser liegt und so eine gleichzeitige homogene Trocknung und Schaumbildung nicht möglich ist.

Weiterhin können geschäumte Polyurethanschichten dadurch erzeugt werden, dass mit Treibgas (z.B. Isobutan, Isopentan) gefüllte Mikrohohlkugeln zu einer Polyurethanmasse gegeben werden. Die Masse kann dann durch Erhitzen als Film getrocknet werden, wobei sich das Treibgas in den Mikrohohlkugeln ausdehnt und die Mikrohohlkugeln im Durchmesser vergrößert, so dass ein Schaum gebildet wird. Homogene, gleichmäßig geschäumte Polyurethanfllme lassen sich allerdings nur dann erzeugen, wenn nur wenig oder kein Lösungsmittel oder Wasser in der Masse vorhanden ist. Bei gleichzeitigem Vorliegen von größeren Wasser- oder Lösungsmittelmengen behindern sich die ausdehnenden Mikrohohlkugeln. Insbesondere bei dickeren Schichten, wie sie zur Herstellung von haptisch angenehmen Kunstledern wünschenswert sind, führt die Verdampfung von Wasser bzw. Lösungsmittel bei schnellerer Trocknung zudem zu Fehlstellen wie Blasen, Löchern, oder Rissen im gefertigten Film.

Alternativ können auch vorexpandierte Mikrohohlkugeln oder Glashohlkugeln eingesetzt werden. Diese schwimmen jedoch wegen ihrer geringen Dichte bei der Masseherstellung auf, so dass keine homogene Mischung gebildet werden kann. Zudem wird bei einer größeren Einsatzmenge, wie sie zur Erzeugung eines homogenen Schaumes notwendig ist, wiederum die Verdampfung von Wasser oder Lösungsmittel behindert, was mit den zuvor beschriebenen negativen Folgen verbunden ist.

In der WO 2019/174754 wird ein Verfahren zur Herstellung eines Schichtgebildes beschrieben, bei dem ein aufgeschäumter Polyurethan-Schlagschaum Mikrohohlkugeln enthalten kann. Der erfindungsgemäße Vorteil ergibt sich hier allerdings nur aus der Verwendung des Polyurethan-Schlagschaums, der eine verfahrenstechnisch bessere Herstellung von bevorzugt Oberflächen-strukturierten Schichtgebilden beschreibt. Dabei muss der Schlagschaum erfindungsgemäß mit definierten Rührern ("wie zur Herstellung von Schlagsahne oder Eischnee") hergestellt werden. Die Zugabe von gasgefüllten Hohlkugeln ist hierbei nur optional und die eingesetzten gasgefüllten Hohlkugeln sind gemäß der WO 2019/174754 nicht für eine spätere weitere Expansion vorgesehen. So werden im Beispiel 2 der WO 2019/174754 Mikrohohlkugeln mit einem Durchmesser von 20 µm verwendet und die entsprechende Mischung wird bei 115°C und kurz bei 120°C getrocknet. Übliche expandierbare Mikrohohlkugeln mit einem solchen Durchmesser (von Sekisui oder Nouryon) zeigen bei diesen Temperaturen noch kein oder nur ein minimales Expansionsverhalten. Des Weiteren enthalten die in WO 2019/174754 beschriebenen Formulierungen für Schlagschäume keine flammhemmenden Additive.

Auch in der DE 10 2019 218 950 A1 wird die Verwendung von expandierbaren Mikrohohlkugeln beschrieben, um in einer mechanisch aufgeschäumten Dispersion eine Schicht mit Schaumstruktur für ein Verbundgebilde herzustellen.

Bei Verwendung von solchen expandierbaren oder schon vorexpandierten Mikrohohlkugeln ist es generell nachteilig, dass in Emissionsprüfungen (zum Beispiel in der VDA 277) an den Produkten immer die zur Expansion genutzten kurzkettigen Kohlenwasserstoffen wie Butan, Isobutan, Pentan oder Isopentan in signifikanten Mengen nachgewiesen werden können.

Vor diesem Hintergrund besteht ein Bedarf für mittels Luft zu Schäumen aufschlagbaren Zusammensetzungen, mit denen dickere verfestigte Schaumschichten mit möglichst homogener Verteilung von Blasen im Schaum hergestellt werden können und wobei die Schäume flammgeschützt ausgestattet sind, so dass bei vergleichsweise geringem Gehalt an (halogenfreiem) Flammschutzmittel eine gewünschte hohe Flammschutzwirkung sichergestellt werden kann. Möglichst soll diese Lösung mit geringem Einsatz von flüchtigen Lösungsmittel und Kohlenwasserstoffen erreichbar sein, so dass hohe Emissionsstandards z.B. für Automobilinnenräume eingehalten werden können.

Die vorliegende Erfindung befasst sich mit diesem Bedarf.

### Beschreibung der Erfindung

In den dieser Anmeldung zugrundeliegenden Untersuchungen wurde überraschend gefunden, dass sich die für dicke verfestigte Schäume geforderten Eigenschaften mit einem Gemisch von Flammschutzmittel erreichen lassen, das Melamincyanurat und ein Aluminiumphosphinat enthält. Durch die Kombination von Flammschutzmittel lässt sich zudem ein überraschend günstiges Schrumpfverhalten bei Exposition der Schäume gegenüber erhöhten Temperaturen realisieren, was insbesondere für Anwendungen im Automobilinnenbereich eine gewünschte Eigenschaft darstellt.

Demzufolge betrifft die vorliegende Erfindung in einem ersten Aspekt eine wässrige Polymerdispersion, die ein dispergiertes Polymer, einen Schaumstabilisator und ein Flammschutzmittelgemisch, das Melamincyanurat und ein Aluminiumphosphinat umfasst, enthält.

Das dispergierte Polymer, dass die Hauptkomponente der wässrigen Polymerdispersion bildet, unterliegt keinen relevanten Beschränkungen, solange das Polymer für die Herstellung von verfestigten Polymerschäumen verwendbar ist. In einer bevorzugten Ausführungsform ist das Polymer ein Polyurethan oder Acrylatpolymer.

Polyurethane bezeichnen dabei Polymere, die in der Regel aus Polyisocyanaten und Polyolen gebildet werden, und zwischen den das Polymer bildenden Einheiten Urethangruppen (-NH-CO-O-) aufweisen. Zusätzlich können Polyurethane in der hier beschriebenen Erfindung auch Harnstoffgruppen (-NH-CO-NH-) enthalten, die sich aus der Hydrolyse von Isocyanatgruppen und die anschließende Reaktion der gebildeten Amine mit Isocyanaten ergeben können. Darüber hinaus kann das Urethan weitere funktionelle Gruppen, wie insbesondere Ether-, Ester- oder Carbonatgruppen enthalten, die in Form von Polyetherpolyolen oder Polyesterpolyolen in einem Polyolvorläufer der Polyurethane enthalten sind, sowie Thiourethangruppen, die aus einer Umsetzung von Thiolen mit Isocyanaten resultieren können. Das Polyurethan wird in der Regel aus Polyurethanvorläufern gebildet, wobei es sich um Polyisocyanate und Polyole, aber auch Isocyanatpräpolymere, die durch Umsetzung von Polyolen mit einem Überschuss an Polyisocyanat erhalten werden, handelt. Oft werden solche Isocyanatpräpolymere mit einem Überschuss von Isocyanatgruppen (NCO) zu OH Gruppen von 2:1 oder mehr gebildet, so dass diese Isocyanatpräpolymere im Mittel aus einer Polyoleinheit und zwei Polyisocyanateinheiten gebildet sind; bei höheren NCO/OH-Verhältnissen liegt zusätzlich freies Polyisocyanat vor.

Erfindungsgemäß ist das Polyurethanen als Dispersion formuliert, in der das Polyurethan zumindest anteilsmäßig getrennt als separate Phase zu dem Lösungsmittel vorliegt. Bevorzugt ist das Lösungsmittel dabei Wasser.

Aus verarbeitungstechnischer Sicht ist es weiterhin bevorzugt, wenn das Polyurethan in der Polymerdispersion wenige Verzweigungen aufweist. Bevorzugt ist das Polyurethan linear, d.h. die Polyole und Polyisocyanate, aus denen das Polyurethan oder die Polyurethanvorläufer gebildet sind, sind jeweils (in Bezug auf OH und NCO) difunktional. Dabei kann wie erwähnt ein geringer Anteil an tri- oder polyfunktionalen Polyolen und Polyisocyanaten (z.B. bis zu jeweils 5 Gew.-% und bevorzugt bis zu jeweils 2 Gew.-%) toleriert werden, ohne dass sich dies in relevant schädlichem Ausmaß auf die Verarbeitbarkeit auswirkt, insbesondere, wenn der Anteil der tri- oder polyfunktionalen Polyole und Polyisocyanate durch höhere Molekulargewichte der Polyole kompensiert wird (z.B. 1 Trifunktionalität auf ein Molekulargewicht von mindestens 2000 g/mol und bevorzugt mindestens 3000 g/mol) .

Bevorzugte Polyisocyanate, aus denen das Polyurethan in der erfindungsgemäßen fließfähigen Formulierung gebildet ist, umfassen aliphatische Polyisocyanate wie Isophorondiisocyanat, Hexamethylendiisocyanat, Dicyclohexylmethan-4,4'-diisocyanat, Hexandiisocyanat und Bis(isocyanatomethyl)-cyclohexan.

Geeignete Polyole, aus denen das Polyurethan in der erfindungsgemäßen fließfähigen Formulierung gebildet sein kann, sind bifunktionelle Polyole und insbesondere bifunktionelle aliphatische Polyole wie Polyetherglykol (z.B. Polyethylenglycol, Polypropylenglycol oder Polytetrahydrofurandiol), Polyesterglykol (z.B. auf Basis von Adipinsäure und α,ω-aliphatischen Diolen mit 1 bis 8 und bevorzugt 4 bis 6 CH₂-Einheiten), Polythioetherpolyol, Polycarbonatpolyol (z.B. auf Basis von 1,6-Hexandiol), ein hydroxylgruppenhaltiges aliphatisches Polyacetat und/oder ein hydroxygruppenhaltiges aliphatisches Polycarbonat. In einer bevorzugten Ausführungsform enthält das Polyurethan ein Polyetherdiol und/oder ein Polyesterdiol. Ganz besonders bevorzugt enthält das Polyurethan Polyethereinheiten, die bevorzugt aus Polyetherpolyolen oder mit Polyethern verlängerten Polyestern resultieren können. Diese Polyole weisen vorzugsweise ein Molekulargewicht Mw von 200 bis 12000, insbesondere von 500 bis 2000 auf, wobei das Molekulargewichtmittel GPC unter Verwendung geeigneter Standards (wie insbesondere Polystyrol) zu bestimmen ist. Zusätzlich können kurzkettige Kettenverlängerer wie insbesondere α,ω-aliphatische Diole mit 1 bis 8 und bevorzugt 4 bis 6 CH₂-Einheiten, α,ω-aliphatischen Diamine mit 1 bis 8 und bevorzugt 4 bis 6 CH₂-Einheiten oder andere organische Verbindungen mit zwei oder mehr reaktiven Gruppen, die als OH-Gruppen, SH-Gruppen, NH-Gruppen, NH₂-Gruppen oder CH-aciden Gruppen, beispielsweise in β -Diketoverbindungen, als Kettenverlängere eingesetzt werden, wobei diese bevorzugt ein Molekulargewicht von weniger als 500 g/mol und insbesondere ein Molekulargewicht von weniger als 300 g/mol aufweisen sollten.

Für die Herstellung von Schäumen geeignete Acrylatpolymere sind z.B. die in der EP 3 929 231 A1 (z.B. in [0040]), oder EP 3 623 400 A1 (z.B. in [0037]) beschriebenen Materialien. Wie die Polyurethane können auch Polyacrylate eine oder mehrere funktionelle Gruppen wie Ester-, Ether-, Carbonat- oder Harnstoffgruppen enthalten.

Bevorzugt ist als Polymer in der erfindungsgemäßen Polymerdispersion ein Polyurethanpolymer.

Der Anteil des dispergierten Polymers in der wässrigen Polymerdispersion beträgt vorzugweise 30 bis 60 Gew.-% und insbesondere 40 bis 60 Gew.-%, bezogen auf das Trockengewicht der Polymerdispersion. Inklusives des Wassers ergibt sich vorzugsweise ein Anteil von 55 bis 90 Gew.-% und insbesondere 65 bis 80 Gew.-%, dann bezogen auf das Gesamtgewicht der Polymerdispersion.

Der zweite erfindungsrelevante Bestandteil der erfindungsgemäßen Polymerdispersion ist ein Schaumstabilisierungsmittel, wobei es sich bevorzugt um ein ionisches oder nicht-ionisches Tensid handelt. Besonders geeignet als Schaumstabilisierungsmittel sind Tenside wie Ammoniumstearat (kommerziell z.B. erhältlich als Stokal^{®} STA von der Bozzetto Group), Succinamat (kommerziell z.B. erhältlich als Stokal^{®} SR) oder das Natriumsalz von Fettsäurealkylpolyglycolethersulfaten (kommerziell z.B. erhältlich als Stokal^{®} SAF new). In einer ganz bevorzugten Ausführungsform wird als Schaumstabilisierungsmittel ein Gemisch von Ammoniumstearat, Succinamat und Natriumsalz von Fettsäurealkylpolyglycolethersulfaten verwendet.

Alternativ oder zusätzlich dazu können weitere Tenside verwendet werden, die bevorzugt ausgewählt sein können aus der Gruppe bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen.

In den im Zusammenhang mit der vorliegenden Erfindung durchgeführten Untersuchungen wurde überraschend gefunden, dass viele Flammschutzmittel den pH-Wert einer Dispersion stark absenken können, was zur Folge hat, dass für die Erzeugung eines Schaums verwendete Schaumstabilisatoren nicht mehr wirksam sind. Durch den Einsatz der erfindungsgemäßen Flammschutzmittelkombination wird ein solcher Effekt vermieden, so dass anionsche Tenside in diesen Polymerdispersionen unproblematisch eingesetzt werden können. Demzufolge ist es bevorzugt, wenn der Schaumstabilisator zumindest anteilsmäßig durch ein anionisches Tensid (wie ein Salz von Ethersulfaten) gebildet wird.

Die Tensidmenge ist auf ein für die Erzeugung eines Schaums mit geeigneten Eigenschaften und einem gewünschten Gasgehalt geeignetes Maß einzustellen. Bevorzugt liegt hierbei der Anteil des Tensids im Bereich von etwa 1 bis 12 Gew.-%, weiter bevorzugt etwa 2 bis 10 Gew.-% und noch weiter bevorzugt bei etwa 4 bis 8 Gew.-%, bezogen auf das Gesamtgewicht der wässrigen Polymerdispersion.

Als dritten erfindungswesentlichen Bestandteil enthält die erfindungsgemäße Polymerdispersion ein Flammschutzmittelgemisch, das Melamincyanurat und ein Aluminiumphosphinat enthält. Das Aluminiumphosphinat wird bevorzugt als Aluminiumdialkylphosphinat und insbesondere als Aluminiumdiethylphosphinat verwendet. Aluminiumdiethylphosphinat ist beispielsweise als Exolit OP 1230 von Clariant erhältlich. Durch das Flammschutzmittelgemisch kann eine Einarbeitung der Flammschutzmittel in die wässrige Polymerdispersion unter Vermeidung von Agglomeratbildung und ohne eine starke Erhöhung der Viskosität realisiert werden, im Vergleich zur Verwendung von nur Melamincyanurat oder nur Aluminiumphosphinat wird eine deutlich bessere Brennrate erreicht.

Die Gesamtmenge an Flammschutzmittel in der erfindungsgemäßen wässrigen Dispersion liegt vorzugsweise im Bereich von 10 bis 30 Gew.-%, insbesondere 12 bis 25 Gew.-% und weiter bevorzugt 15 bis 20 Gew.-%, wobei sich die Menge des Flammschutzmittels auf das Gesamtgewicht der wässrigen Dispersion (inklusive Wasser als Lösungsmittel) bezieht.

Das Verhältnis von Melamincyanurat und Aluminiumphosphinat unterliegt keinen relevanten Einschränkungen wobei zweckmäßig beide Flammschutzmittel in einem relevanten Anteil (mindestens 5 Gew.-% bezogen auf das Gesamtgewicht der Flammschutzmittel in der wässrigen Dispersion) enthalten sein sollten. Bevorzugt liegen Melamincyanurat und Aluminiumphosphinat in einem Verhältnis von 10:1 bis 1:10, weiter bevorzugt 5:1 bis 1:5 und noch weiter bevorzugt 3:1 bis 1:3 vor, ganz besonders bevorzugt ist ein Verhältnis von etwa 1:1 bis 1:2.

Neben den beiden genannten Flammschutzmitteln kann die erfindungsgemäße wässrige Dispersion weitere Flammschutzmittel enthalten, die umfassen, aber nicht beschränkt sind auf organische Phosphorverbindungen wie organisches Phosphinat, Arylphosphatester oder phosphorhaltiges Polyol, Ammoniumpolyphosphat, Melaminphosphat, Melamin, Melamin-Phosphat oder -Polyphosphat, roter Phosphor, Aluminiumtrihydroxid, Magnesiumhydroxid, Zinkstannat, expandierbarer Graphit und Zinkborat. Da diese Flammschutzmittel aber die vorteilhafte Wirkung des erfindungsgemäßen Flammschutzmittelgemischs aus Melamincyanurat und Aluminiumphosphinat beeinträchtigen können, ist es bevorzugt, wenn solche zusätzlichen Flammschutzmittel einen Anteil von weniger als 30 Gew.-% bezogen auf die Gesamtmenge an Flammschutzmittel, insbesondere weniger als 20 Gew.-% und weiter bevorzugt weniger als 10 Gew.-% ausmachen. In einer ganz besonders bevorzugten Ausführungsform enthält die erfindungsgemäße wässrige Dispersion nur Melamincyanurat und Aluminiumphosphinat, insbesondere in Form von Aluminiumdiethylphosphinat als Flammschutzmittel.

Da halogenhaltige Flammschutzmittel im Brandfall Halogenwasserstoffe abgeben können, die toxisch sind, ist es zudem bevorzugt, wenn die erfindungsgemäße wässrige Polymerdispersion frei von halogenhaltigen Flammschutzmitteln ist.

Wie vorstehend erläutert sind die erfindungsgemäßen wässrigen Polymerdispersionen insbesondere zur Herstellung von verfestigten Schaumfilmen gedacht, so dass die wässrige Polymerdispersion in einer bevorzugten Ausführungsform als Schaum ausgebildet ist, der Blasen eines Gases enthält. Bevorzugt weist dieser Schaum einen Gasanteil im Bereich von 10 bis 65 Vol.-% und bevorzugt 25 bis 55 Vol.-% auf, mit dem eine günstige Eingriffshaptik, die der Verbraucher mit der Haptik von Leder assoziiert, realisiert werden kann. Das Gas ist zweckmäßig Luft, kann aber auch ein Inertgas wie Stickstoff, Argon oder Kohlendioxid sein.

Neben den im Vorstehenden genannten Bestandteilen kann die erfindungsgemäße wässrige Dispersion weitere Additive zur Eigenschaftsteuerung enthalten. Beispielsweise kann es wünschenswert sein, wenn das Polymer infolge der Bildung einer Polymerschicht partiell vernetzt wird. Zu diesem Zweck kann die wässrige Dispersion zusätzlich geeignete Vernetzer, z.B. auf Basis von Isocyanaten, Carbodiimiden und/oder Epoxiden enthalten. Als geeigneter Anteil für solche Vernetzer kann eine Menge im Bereich von bis zu 5 Gew.-% bezogen auf die Trockenmasse der wässrigen Dispersion angegeben werden, wobei typischerweise der Anteil in einem Bereich von 0,2 bis 4 Gew.-% und bevorzugt etwa 1 bis 3 Gew.-% eingestellt wird. Für wässrige Dispersionen, die ein Polyurethan als Polymer enthalten, ist es bevorzugt, wenn ein Vernetzer auf Basis von Isocyanaten in die Dispersion einbezogen wird.

Neben Vernetzungsmitteln können übliche Additive in die wässrige Dispersion einbezogen werden und darin enthalten sein, die (ohne Beschränkung) ausgewählt sind aus Füllstoffen, insbesondere mineralischen und/oder biobasierten Füllstoffen, Verdickern, Rheologiehilfsmitteln, pH-regulierenden Mitteln, Alterungsschutz-mitteln, Lösungsmittel und Pigmenten. Ein geeinigter Verdicker ist beispielsweise ein Verdicker auf Basis von Acrylat-Copolymeren.

Bei Additiven wie Verdickern, Rheologiehilfsmitteln, pH-regulierenden Mitteln, Alterungsschutzmitteln, und Pigmenten ist es meist ausreichend, wenn diese in vergleichsweise geringen Mengen in die erfindungsgemäße wässrige Dispersion einbezogen werden, so dass deren Gesamtgehalt in der Regel 10 Gew.-% bezogen auf den Trockengehalt der wässrigen Dispersion nicht übersteigt. Für Lösungsmittel oder Kohlenwasserstoffe ist es bevorzugt, wenn diese nicht in die erfindungsgemäße wässrige Dispersion einbezogen werden (d.h. auch nicht in verkapselter Form z.B. in Kohlenwasserstoff gefüllten Mikrohohlkugeln), da solche Lösungsmittel anschließend aus dem aus der wässrigen Dispersion hergestellten Produkt entfernt werden müssen.

Demgegenüber können Füllstoffe auch in größeren Mengen in die erfindungsgemäße wässrige Dispersion einbezogen werden, z.B. in einem Anteil von bis zu 40 Gew.-% und bevorzugt etwa 10 bis etwa 30 Gew.-%. In einer Ausführungsform enthält die erfindungsgemäße wässrige Dispersion keine zugesetzten Füllstoffe.

Wie vorstehend erwähnt ist es hinsichtlich der Stabilität eines hergestellten Schaums von Vorteil, wenn die wässrige Dispersion einen annähernd neutralen pH-Wert aufweist. Zu diesem Zweck weist die erfindungsgemäße wässrige Polymerdispersion daher bevorzugt einen pH-Wert von 5 bis 10 und bevorzugt 6 bis 9 auf. Zur Einstellung des pH-Wert kann die wässrige Polymerdispersion Neutralisationsmittel enthalten, wobei es bevorzugt ist, wenn als Neutralisationsmittel keine oder wenige Amine eingesetzt werden (Maximalanteil in der Zusammensetzung bevorzugt 0,5 Gew.-% und insbesondere 0,2 Gew.-%), da diese in der Folge als Emissionen aus dem verfestigten Schaum entweichen können.

In einem weiteren Aspekt betrifft die vorliegende Erfindung ein Verbundgebilde, mit mehreren Schichten, in dem mindestens eine der Schichten durch Verfestigung einer wässrigen Polymerdispersion gemäß dem vorbeschriebenen ersten Aspekt gebildet ist. Die durch Verfestigung der wässrigen Polymerdispersion erzeugte Schicht liegt bevorzugt als Schaumschicht vor. Die Schaumschicht weist dabei bevorzugt eine Dicke im Bereich von 100 µm bis 2 mm und insbesondere im Bereich von 300 µm bis 1 mm auf.

In einer besonders bevorzugten Ausführungsform weist das erfindungsgemäße Verbundgebilde eine geprägte oder genarbte kompakte Deckschicht, eine Schicht aus verfestigtem Schaum und eine Textilträgerschicht auf der der Deckschicht gegenüberliegenden Seite des Verbundgebildes auf, wobei die Schicht aus verfestigtem Schaum aus der wässrigen Polymerdispersion gemäß dem geschilderten ersten Aspekt gebildet ist. Die geprägte oder genarbte Deckschicht weist eine bestimmte und erwünschte dreidimensionale Oberflächenstruktur auf, die bei einer Prägung regelmäßig sein kann und bei einer Narbe so gestaltet ist, dass der Benutzer die Struktur mit einer Lederoberfläche assoziiert; diese kann ein Aussehen aufweisen wie ein Spaltleder oder wie die zur Haarseite (oder Außenseite, wenn keine Haare vorhanden) gerichtete, Oberfläche eines echten Leders.

In dem erfindungsgemäßen Verbundgebilde ist die Deckschicht zweckmäßig eine Polyurethandeckschicht, wie sie aus Kunstlederapplikationen bekannt ist, z.B. eine aliphatische Polyether-Polyurethandispersion. Die Deckschicht weist bevorzugt eine Dicke von 15 bis 100 µm, weiter bevorzugt von 25 bis 80 µm und noch weiter bevorzugt von 40 bis 75 µm auf.

Als Textilträgerschicht können alle in Bereich der Kunstleder üblich verwendeten Textilien verwendet werden, insbesondere Textilien auf Basis von Polyestern.

Die Textilträgerschicht wird im erfindungsgemäßen Verbundgebilde zweckmäßig mit Hilfe eines Klebstoffs oder einer Kaschiermasse mit der aus der erfindungsgemäßen Polymerdispersion gebildeten verfestigten Schaumschicht verbunden, wobei in einer bevorzugten Ausführungsform die Schaumschicht und die Kaschiermasse auf einem Polyurethan beruht. In diesem Fall kann das Polyurethan aus den gleichen oder ähnlichen Bestandteilen gebildet sein, wie das in dem verfestigten Schaum enthaltenen Polyurethan, wobei die Kaschiermasse kein Schaumstabilisierungsmittel enthält, und kein Flammschutzmittel oder Gemisch von Flammschutzmitteln enthalten muss. Bevorzugt wird in der Kaschiermasse ein aliphatisches Polyurethan verwendet. Die Kaschiermassse wird zweckmäßig mit einer Dicke im Bereich von 50 bis 500 µm und bevorzugt 100 bis 300 µm in dem erfindungsgemäßen Verbundsystem ausgebildet.

Für das erfindungsgemäße Verbundgebilde ist es weiterhin bevorzugt, wenn es eine möglichst niedrige Brennrate aufweist, wobei die Brennrate im Kontext der hier beschrieben Erfindung mittels FMVSS 302 bestimmt wird. Insbesondere weist das erfindungsgemäße Verbundgebilde eine Brennrate von gleich oder weniger als 80 mm/min, weiter bevorzugt gleich oder weniger als 50 mm/min und noch weiter bevorzugt von gleich oder weniger als 30 mm/min auf. Hierzu ist es darüber hinaus bevorzugt, wenn die verfestigte Schaumschicht im Verbundgebilde einen Anteil (bezogen auf das Gewicht der festen Anteile der verfestigten Schaumschicht) von höchstens 35 Gew.-% und bevorzugt höchstens 30 Gew.-% und noch weiter bevorzugt höchstens 28 Gew.-% aufweist.

Andere Verbundgebilde, die durch Verfestigung einer erfindungsgemäßen wässrigen Polymerdispersion hergestellt werden können, sind insbesondere Verbundgebilde die eine weiche Haptik oder Atmungsaktivität aufweisen sollen. Prinzipiell kann eine verfestigte Schaumfolie auf der erfindungsgemäßen Basis in jedem beliebigen Schichtverbund oder auch als einzelne Folie eingesetzt werden, zum Beispiel als Einzellage zur Beschichtung eines Textils oder Leders.

Ein noch weiterer Aspekt der vorliegenden Erfindung betrifft ein Verfahren zur Herstellung eines Verbundgebildes, wie vorstehend beschrieben, wobei eine wässrige Polymerdispersion gemäß dem vorstehend beschriebenen ersten Aspekt bevorzugt in Form eines Schaums, auf ein Substrat aufgebracht und zu einer zusammenhängenden Schicht verfestigt wird. Das Verfestigen erfolgt in der Regel durch Trocknen des Schaums, wobei Wasser verdampft und so der wässrigen Dispersion entzogen wird, wobei sich diese verfestigt. In einer bevorzugten Ausführungsform umfasst das Verfahren einen Schritt i) des Aufbringens einer Deckschicht, bevorzugt auf der Basis von Polyurethan, auf ein Substrat, das eine Oberflächenstruktur aufweisen kann, die dem Negativ einer Ledernarbe entspricht, Verfestigen der Deckschicht, Aufbringen der wässrigen Polymerdispersion in Schaumform auf die Deckschicht und Verfestigen derselben, Aufbringen einer Klebstoffschicht oder Kaschiermasse, bevorzugt auf der Basis von Polyurethan auf die verfestigte Schaumschicht und Auflegen einer Textilträgerschicht auf die Klebstoffschicht oder Kaschiermasse. Anschließend kann das Substrat von der Deckschicht abgezogen werden. Gegebenenfalls kann die Deckschicht anschließend noch mit einer Lackschicht modifiziert werden, z.B. mit einem Acrylat- oder Polyurethan-basierten Lack.

In einer noch weiteren Ausführungsform betrifft die vorliegende Erfindung die Verwendung einer Flammschutzmittelkombination, die Melamincyanurat und ein Aluminiumphosphinat enthält, in einer aus einer Polymerdispersion oder Lösung gebildeten verfestigten Schaumschicht zur Verminderung des Dickenschrumpfes der verfestigten Schaumschicht. Hierbei bezeichnet "Dickenschrumpf" eine Dickenverminderung des Verbundsystems, die sich bei einer Lagerung bei erhöhter Temperatur einstellt, ohne dass ein Druck auf das Verbundsystem ausgeübt wird. Die Verwendung ist vorzugsweise so ausgestaltet, dass Melamincyanurat und Aluminiumphosphinat, in einer Menge in das Verbundsystem einbezogen werden, dass sich bei einer Lagerung bei 100°C für 14 d (ca. 2% Luftfeuchtigkeit) eine Dickenänderung von höchstens -10%, bevorzugt höchstens -7% und weiter bevorzugt höchstens -3% und/oder bei einer Lagerung bei 70°C bei 95% Luftfeuchtigkeit für 14d eine Dickenänderung von höchstens -10% bevorzugt höchstens -7% und weiter bevorzugt höchstens -3% ergibt (das negative Vorzeichen bezeichnet hier den Umstand, dass die Dicke abnimmt). In der Verwendung ist das Aluminiumphosphinat vorzugsweise Aluminiumdiethylphosphinat.

Die erfindungsgemäßen Verbundgebilde können in jeglichen Applikationen verwendet werden, in denen Leder als Oberflächenmaterial verwendet wird, beispielsweise in Bekleidung, als Möbelbezug oder in Architekturanwendungen. Demzufolge betrifft ein weiterer Aspekt der vorliegenden Erfindung die Verwendung eines wie vorstehend beschriebenen Verbundgebildes zur Herstellung von Bekleidung, als Möbelbezug oder in Architekturanwendungen. Weitere Anwendungsmöglichkeiten der erfindungsgemäßen Verbundgebilde umfassen Verpackungen, Isolationsmaterialien, Polsterungen oder Membranen.

Die erfindungsgemäßen Verbundgebilde können durch die spezielle Kombination von Flammschutzmitteln so formuliert werden, dass eine Verfärbung des Produktes nach längerer Exposition von Wärme oder UV-Strahlung sehr gering ist, so dass erfindungsgemäße aufgebaute Kunstleder problemlos zum Beispiel in Instrumententafeln von Fahrzeugen eingesetzt werden können. Zudem sind die erfindungsgemäßen Verbundgebilde auch nach langer Wärmeexposition (z.B. Klimalagerung bei Temperaturen bis zu 105°C über 26 Wochen) sehr dimensionsstabil. Durch eine geeignete Deckschicht und ggf. einen aufgebrachten Lack können die erfindungsgemäßen Verbundgebilde zudem sehr abriebstabil und flexibel sein, so dass sie für übliche Sitzanwendungen im Möbel- und Automobilbereich einsetzbar sind und die hierfür notwendigen Qualitätsprüfungen (Robotertest, Ein- und Ausstiegstest) bestehen. Durch die Verwendung von geeigneten Materialen für die einzelnen Schichten des Verbundgebildes kann dieses in einem weiten Temperaturbereich (ab -20°C) flexibel sein, so dass die Gefahr von Kunstlederbrüchen durch Sprödigkeit bei Kälte im Sitz deutlich vermindert wird.

Durch den Einbezug der Flammschutzmittelkombination können in der hier beschriebenen Erfindung insbesondere die folgenden Vorteile realisiert werden:
- die Herstellung von Kunstledern bzw. Verbundmaterialien mit textilen Trägern mit einer Brennrate nach FMVSS 302 von kleiner als 50 mm/min bei Einsatz von Flammschutzmengen von maximal 20% in den Schlagschaumrezepturen wird ermöglicht
- es können bei einer Einsatzmenge von maximal 20% Flammschutzmittel (in der wässrigen Polymerdispersion) Verbundmaterialien hergestellt werden, die eine Brennrate von 0 mm/min nach FMVSS 302 aufweisen
- es können halogenfreie oder emissionsfreie Verbundmaterialen ohne Lösungsmittel und anderen Kohlenwasserstoffen hergestellt werden
- die hergestellten Verbundgebilde sind frei von Emissionen, die von Flammschutzmitteln verursacht werden
- es können Verbundgebilde hergestellt werden, die in der Dicke nach Wärmelagerung bei 100°C und bei 70°C/95% Luftfeuchtigkeit nur einen sehr geringen Schrumpf in der Dicke aufweisen
- die Verbundgebilde können unter Verwendung üblicher Transferbeschichtungen oder Direktbeschichtungsverfahren hergestellt werden
- als Dispersionen insbesondere im Schlagschaum werden bevorzugt Dispersionen eingesetzt, die frei von Co-Lösungsmittel sind und die einen Festkörpergehalt ≥ 50 % besitzen.

Im Folgenden wird die vorliegende Erfindung anhand einiger illustrierender Beispiele noch näher erläutert.

### Beispiele

Im Folgenden werden die Vorteile der Erfindung anhand eines exemplarischen Aufbaus aus einer kompakten Folie, basierend auf einer wässrigen Polyurethandispersion, in Verbindung mit einer geschäumten Folie, die auf einer wässrigen Polyurethandispersion basiert, einer Polyurethan-basierten Kaschiermasse und einem textilen Träger dargestellt.

### 1) Herstellung eines Aufbaus des Verbundgebildes:

### a) Herstellung der kompakten Dekorfolie:

1000 g einer aliphatischen Polyether- Polyurethandispersion mit 60% Festkörper werden mit 15 g eines Verdickers auf Basis eines Acrylatcopolymeren, 5 g eines Silikon-basierten Entschäumers und 8 g eines Isocyanat-Venetzers (aliphatisches Isocyanat auf Basis eines 1,6- Hexamethylendiisocyanats; 21,8% Isocyanatgehalt) in einem Ansatzbehälter 10 Min gerührt und die Masse wird anschließend in einer Vakuumatmosphäre entlüftet. Die Masse wird dann mit einem Streichmesser und einem Spaltabstand von 120 µm auf ein geeignetes Streichpapier aufgetragen wird 120 Sekunden bei 80°C bis 150°C (mit ansteigendem Temperaturprofil) getrocknet, so dass eine Folie mit einem Gewicht von ca. 55 - 65 g/m² erhalten wird.

### b) Herstellung und Applikation der geschäumten Folie:

Die Herstellung der geschäumten Folie wird exemplarisch anhand der folgenden Rezeptur dargestellt: 750 g einer aliphatischen Polyether-Polyurethandispersion mit 60% Festkörper werden unter Rühren mit ca. 2,8 g eines Verdickers auf Acrylatbasis, 9,4 g Stokal SR (Schaumhilfsmittel, Bozetto), 9,4 g Stokal SAF new (Schaumhilfsmittel, Bozetto), 28 g Stokal STA (Schaumhilfsmittel, Bozetto) und 20 g eines Isocyanat-Vernetzers (aliphatisches Isocyanat auf Basis eines 1,6-Hexamethylendiisocyanats; 23,5 % Isocyanatgehalt ) und 200 g eines Flammschutzmittels vermischt und in einem Ansatzbehälter 10 Min gerührt. Die Masse wird dann in einem Schlagschaummixer der Fa. Hansa auf eine Dichte von 500 g/l aufgeschäumt und mit einem Streichmesser mit einem definierten Rakelspalt von 800 µm gleichmäßig auf die in 1a) hergestellte Folie aufgetragen und 240 Sekunden bei 110°C bis 155°C mit ansteigendem Temperaturprofil getrocknet.

### c) Herstellung des Verbundmaterials durch Applikation der Kaschiermasse und des textilen Trägers:

835 g einer aliphatischen Polyurethandispersion mit 50 % Festkörper werden unter Rühren mit ca. 5,9 g eines Verdickers auf Acrylatbasis und 16,7 g eines Isocyanat-Vernetzers (aliphatisches Isocyanat auf Basis eines 1,6-Hexamethylendiisocyanats; 23,5 % Isocyanatgehalt) vermischt und in einem Ansatzbehälter 10 Min gerührt.

Die Masse wird mit einem Streichmesser und einem Spaltabstand von 200 µm gleichmäßig auf die 1b) hergestellte Folie aufgetragen. Dann wird in die verstrichene noch flüssige Masse ein textiler Träger (Gestrick, Polyester-Fang-Krepp mit 120 g/m² Gewicht, Fa. Reichenbach) eingelegt und 240 Sekunden bei 80°C bis 155°C mit ansteigendem Temperaturprofi getrocknet. Der so hergestellte Verbund wird anschließend vom Trägerpapier abgezogen und kann optional oberflächlich noch mit einer Lackierung versehen werden.

Vergleichsbeispiele, bei denen übliche halogenfreie Flammschutzmittel mit einem Aufbau entsprechend 1a - c verwendet wurden, sind in Tabelle 1 aufgeführt. Erfindungsgemäße Beispiele sind in Tabelle 2 aufgeführt.

**Tabelle 1**

| Nr. | Flammschutzmittel | Aggregatzustand | Chemische Beschreibung | Einarbeitung und Aufschäumverhalten | Brennrate nach FMVSS 302 in Verbundgebilde bei Einsatzmenge von 20% [mm/min] | Wärmelagerung bei 10 °C bei 100 °C, 14 Tage |
|---|---|---|---|---|---|---|
| 1 | Ignisal LP57 gut | flüssig | org. Phosphorverbindung | gut | > 50 mm/min | |
| 2 | Ignisal P48 | fest | Ammoniumpolyphosphat | wirkt stark verdickend, Agglomeratbildung | | |
| 3 | Melapur MC 25 | fest | Melamincyanurat | gut | >50 mm/min | |
| 4 | Exolit AP 423 | fest | Ammoniumpolyphosphat | wirkt stark verdickend, Agglomeratbildung | | |
| 5 | Exolit AP 462 | fest | Ammoniumpolyphosphat gekapselt in Melaminharz | wirkt stark verdickend, Agglomeratbildung | | |
| 6 | Exolit OP 1230 | fest | Aluminiumdiethylphosphinat | gut | > 50 mm/min | |
| 7 | Exolit OP 1311 | fest | org. Phosphinat | gut | > 50 mm/min | |
| 8 | Exolit OP 550 (LV) | flüssig | phosphorhaltiges Polyol | gut | > 50 mm/min | |
| 9 | Exolit OP 560 | flüssig | phosphorhaltiges Polyol | gut | > 50 mm/min | |
| 10 | Exolit RP 6520 | flüssig | roter Phosphor (dispergiert) | gut | > 50 mm/min | |
| 11 | Reflamal 520 | fest | Aluminiumtrihydroxid | gut | > 50 mm/min | |
| 12 | Melagard MP | Fest | Melaminphosphat | starke pH-Wert-Absenkung, schlechtes Aufschäumverhalten | | |
| 13 | Phoslite B 64 | fest | Aluminiumphosphat, Amin | wirkt stark verdickend, Agglomeratbildung | | |
| 14 | Char 52 | fest | Magnesiumhydroxid | Agglomeratbildung | | |
| 15 | Magnifin H10 MV | fest | Magnesiumhydroxid | Agglomeratbildung | | |
| 16 | Magnifin H5 MV | fest | Magnesiumhydroxid | Agglomeratbildung | | |
| 17 | Martinal Char-42 | fest | Aluminiumtrihydroxid | gut | > 50 mm/min | |
| 18 | Flamtard 5 | fest | Zink Stannat | Schaum trocknet nur mit Rissen, schwer dispergierbar | > 50 mm/min | |
| 19 | Nord-Min 17 | fest | expandierbarer Graphit | gut | > 50 mm/min | |
| 20 | Nord-Min 20 | fest | expandierbarer Graphit | gut | > 50 mm/min | |
| 21 | Nord-Min 35 | fest | expandierbarer Graphit | gut | > 50 mm/min | |
| 22 | Aflamman PPN 1 | fest | Ammoniumpolyphosphat | wirkt stark verdickend, Agglomeratbildung | | |
| 23 | Aflammit PCI 511 | fest | Zinkborat | gut | > 50 mm/min | |
| 24 | Aflammit PCO 700 | fest | org. Phosphor-/ Stickstoffverbindung | wirkt stark verdickend, nicht schäumbar | | |
| 25 | Aflammit PCO 800 | fest | org. Phosphor-/ Stickstoffverbindung | wirkt verdickend, starke pH-Wertabsenkung==> schlecht schäumbar | | |
| 26 | Aflammit PCO 962 | fest | zyklisches Phosphonat | gut | < 50 mm/min | Migration auf die Oberfläche |
| 27 | Aflammit PLF 280 | flüssig | Arylphosphatester | gut | < 50 mm/min | Schaumkollaps |
| 28 | Aflammit PLF 710 | flüssig | Phosphonat (zyklisch) | Phosphonat (zyklisch) | < 50 mm/min | starke Gelbverfärbung in der Alterung |
| 29 | Aflammit PMN 185 | fest | Melamin-Phosphat | starke pH-Wert-Absenkung, schlechtes Aufschäumverhalten | | |
| 30 | Aflammit PMN 200 | fest | Melamin-Polyphosphat | starke pH-Wert-Absenkung, schlechtes Aufschäumverhalten | | |
| 31 | Aflammit PMN 500 | fest | Melamin | gut | < 50 mm/min | Migration auf die Oberfläche |
| 32 | Aflammit PMN 544 | fest | Melaminborat, modifiziert | Agglomeratbildung | | |
| 33 | Emtex T 294 | flüssig | org. Stickstoff- und anorg. Phosphorverbindungen | wirkt stark verdickend, nicht schäumbar | | |
| 34 | Emtex U 995 | fest | org. Stickstoffverbindung | wirkt stark verdickend, nicht schäumbar | | |
| 35 | Emtex U 996 | flüssig | Aluminiumhydroxid, org. Stickstoffverbindungen | gut | > 50 mm/min | |
| 36 | Masteret 80450 | flüssig | roter Phosphor | gut | > 50 mm/min | |
| 37 | WTH-MPP | fest | Melaminpolyphosphat | starke pH-Wert-Absenkung, schlechtes Aufschäumverhalten | | |

**Tabelle 2**

| Nr. | Textiler Träger | Flammschutzmittel | Einsatzmenge Flammschutzmittel [g] | Brennrate nach FMVSS 302 [mm/min] | Dickenänderung nach 14 d 100°C [%] | Dickenänderung nach 14 d 70°C, 95% Luftfeuchte [%] |
|---|---|---|---|---|---|---|
| 38 | A | ohne | | 130 | | |
| 39 | A | Reflamal S 20 | 20 | 67 | -11 | -6 |
| 40 | A | Melapur MC 25 / Exolit OP 1230 (5,9 : 9,1) | 5 | 42 | -10 | -5 |
| 41 | A | Melapur MC 25 / Exolit OP 1230 (5,9 : 9,1) | 12,5 | 8 | -7 | -5 |
| 42 | A | Melapur MC 25 / Exolit OP 1230 (5,9 : 9,1) | 20 | 0 | -1 | 0 |
| 43 | B | Melapur MC 25 / Exolit OP 1230 (5,9 : 9,1) | 5 | 92 | -3 | -10 |
| 44 | B | Melapur MC 25 / Exolit OP 1230 (5,9 : 9,1) | 12,5 | 65 | -7 | -7 |
| 45 | B | Melapur MC 25 / Exolit OP 1230 (5,9 : 9,1) | 20 | 0 | -2 | -3 |

| | | | | | | |
|---|---|---|---|---|---|---|
| A Polyester Fang-Krepp, 120 g/m²; B Baumwolle/Polyester-Gestrick (35/65), 140 g/m² | | | | | | |

Wie aus Tabelle 1 ersichtlich wird, sind viele Flammschutzmittelsysteme in Dispersionsschlagschäumen wegen Agglomeratbildung oder schlechter Dispergierbarkeit, wegen starker pH-Wert-Erniedrigung oder wegen starker Viskositätserhöhung nicht einsetzbar oder behindern das mechanische homogene Aufschäumen (Beispiele 2, 4, 5, 12-16, 18, 22, 24, 25, 29, 30, 32-34, 37). Andere Flammschutzmittel hingegen sind zwar gut einarbeitbar und ermöglichen das homogene Aufschäumen der Masse, führen aber nicht zu Brennraten < 50 mm/min im entsprechenden Aufbau (Beispiele 1, 3, 6-11, 17-21, 23, 35, 36). Die Beispiele 26-28 und 31 zeigen, dass mit einigen Flammschutzmitteln eine niedrige Brennrate <50 mm/min erreicht werden kann, wobei gleichzeitig eine gute Einarbeitbarkeit und ein gutes Aufschäumverhalten gegeben ist. Allerdings zeigen diese Flammschutzmittel in einer nachfolgenden Wärmelagerung Nachteile wie Migration des Flammschutzmittels oder Bestandteilen daraus an die Oberfläche oder ungünstige Alterungseigenschaften des Verbundmaterials (z.B. deutlich sichtbare Gelbverfärbung).

Durch eine erfindungsgemäße Kombination von Flammschutzmitteln und dem Einsatz in einem Verbund gemäß 1a - c wurden auf der anderen Seite eine gute Einarbeitbarkeit und Schäumbarkeit der Dispersionen bei sehr niedrigen Brennraten erreicht (sh. Tabelle 2). Mit einer Kombination aus Flammschutzmittel auf Basis von Melamincyanurat (Melapur MC 25) und auf Basis von Aluminiumphosphinat (Exolit OP 1230) mit einer Einsatzmenge von 20 g im Verbund 1a - c wurde eine Brennrate von 0 mm/min erreicht. Bei Einsatz von nur 50 g anstatt 200 g Flammschutzmittel in der Formulierung 1b werden schon Brennraten im Verbund unter 50 mm/min erreicht (sh. Tabelle 2, Nr. 40).

Auch wenn ein anderes Textil anstelle des Polyestergestricks in der Lage 1c verwendet wurde, (Baumwolle/Polyester-Gestrick, 140 g/m², Fa. Reichenbach) werden bei Einsatz von 200 g Flammschutzmittel Brennraten von 0 mm/min erreicht.

Generell zeigt sich bei der Kombination der Flammschutzmittel ein Verhältnis von Melamincyanurat zu Aluminiumphosphinat von 5,9 zu 9,1 als besonders günstig.

Andere Verhältnisse führen aber ebenfalls zu deutlich reduzierten Brennraten gegenüber den Vergleichsbeispielen.

Zusätzlich wurde überraschend festgestellt, dass durch den Zusatz der Flammschutzmittel auch eine verbesserte Dimensionsstabilität nach 14 Tagen Lagerung bei 100°C oder auch nach 14 Tagen Lagerung in einer feucht-heißen Atmosphäre erreicht wurde, was sich in einer deutlich reduzierten Dickenverminderung im Vergleich zu einer Referenz mit Reflamal S20 (Vergleichsbeispiel 39) als Flammschutzmittel äußert.

## Patentansprüche

1. Wässrige Polymerdispersion umfassend
- ein dispergiertes Polymer
- einen Schaumstabilisator und
- ein Flammschutzmittelgemisch, das Melamincyanurat und ein Aluminiumphosphinat enthält.

2. Wässrige Polymerdispersion gemäß Anspruch 1, **dadurch gekennzeichnet, dass** sie einen Flammschutzmittelgehalt im Bereich von 10 bis 30 Gew.-%, bevorzugt 12 bis 25 Gew.-% und weiter bevorzugt 15 bis 20 Gew.-% aufweist.

3. Wässrige Polymerdispersion gemäß Anspruch 1 oder 2, **dadurch gekennzeichnet, dass** das Aluminiumphosphinat als Aluminiumdialkylphosphinat und bevorzugt als Aluminiumdiethylphosphinat vorliegt.

4. Wässrige Polymerdispersion gemäß einem der Ansprüche 1 bis 3, **dadurch gekennzeichnet, dass** das dispergierte Polymer ein Acrylatpolymer oder ein Polyurethanpolymer, bevorzugt ein Polyurethanpolymer ist.

5. Wässrige Polymerdispersion gemäß einem der vorangehenden Ansprüche, **dadurch gekennzeichnet, dass** das dispergierte Polymer ein aliphatisches Polyurethan ist, das bevorzugt Polyethereinheiten aufweist.

6. Wässrige Polymerdispersion gemäß einem der vorangehenden Ansprüche **dadurch gekennzeichnet, dass** der Schaumstabilisator in Form von ionischen oder nicht ionischen Tensiden vorliegt, wobei bevorzugt mindestens ein Teil des Schaumstabilisators durch ein anionisches Tensid gebildet wird.

7. Wässrige Polymerdispersion gemäß einem der vorangehenden Ansprüche, **dadurch gekennzeichnet, dass** die Dispersion als Schaum mit einem Gasanteil im Bereich von 10 bis 65 Vol.-% und bevorzugt 25 bis 55 Vol.-% vorliegt.

8. Wässrige Polymerdispersion gemäß einem der vorangehenden Ansprüche, **dadurch gekennzeichnet, dass** die Dispersion frei von halogenhaltigen Flammschutzmitteln ist.

9. Wässrige Polymerdispersion gemäß einem der vorangehenden Ansprüche, **dadurch gekennzeichnet, dass** die Dispersion einen oder mehrere Vernetzer ausgewählt aus der Gruppe umfassend Isocyanat-, Carbodiimid- und Epoxy-Vernetzer, und/oder ein oder mehrere Additive ausgewählt aus Füllstoffen, insbesondere mineralischen und/oder biobasierten Füllstoffen, Verdickern, Rheologiehilfsmitteln, pH-regulierenden Mitteln, Alterungsschutzmitteln und Pigmenten enthält.

10. Wässrige Polymerdispersion gemäß einem der vorangehenden Ansprüche, wobei die Dispersion einen pH-Wert im Bereich von 5 bis 10 und bevorzugt 6 bis 9 aufweist.

11. Verbundgebilde mit mehreren Schichten, **dadurch gekennzeichnet, dass** mindestens eine der Schichten durch Verfestigung einer wässrigen Polymerdispersion gemäß mindestens einem der Ansprüche 1 bis 10 gebildet ist.

12. Verbundgebilde gemäß Anspruch 11, das eine genarbte Deckschicht, eine Schicht aus verfestigtem Schaum und eine Textilschicht auf der der Deckschicht gegenüberliegenden Seite des Verbundsystems aufweist, wobei die Schicht aus verfestigtem Schaum aus einer wässrigen Polymerdispersion gemäß mindestens einem der Ansprüche 1 bis 10 gebildet ist.

13. Verbundgebilde gemäß Anspruch 11 oder 12, das eine Brennrate nach FMVSS 302 von weniger als 50 mm/min aufweist, wobei bevorzugt der Anteil des Flammschutzmittels in der aus der wässrigen Dispersion gebildeten Schicht weniger als 30 Gew.-% beträgt.

14. Verfahren zu Herstellung eines Verbundgebildes gemäß mindestens einem der Ansprüche 11 bis 13, wobei eine wässrige Polymerdispersion gemäß mindestens einem der Ansprüche 1 bis 10, bevorzugt in Form eines Schaums, auf ein Substrat aufgebracht und zu einer zusammenhängenden Schicht verfestigt wird.

15. Verwendung einer Flammschutzmittelkombination, die Melamincyanurat und ein Aluminiumphosphinat, bevorzugt im Form von Aluminiumdiethylphosphinat, enthält, in einer aus einer Polymerdispersion oder Lösung gebildeten verfestigten Schaumschicht zur Verminderung des Dickenschrumpfes der Schaumschicht.

16. Verwendung eines Verbundgebildes nach einem der Ansprüche 11 bis 13 zur Herstellung von Bekleidung, als Möbelbezug oder in Architekturanwendungen.

## Claims

1. Aqueous polymer dispersion comprehensive
- a dispersed polymer
- a foam stabilizer and
- a flame retardant mixture containing melamine cyanurate and an aluminium phosphinate.

2. Aqueous polymer dispersion according to claim 1, **characterized in that**
that it has a flame retardant content in the range of 10 to 30% by weight, preferably 12 to 25% by weight and preferably 15 to 20% by weight.

3. Aqueous polymer dispersion according to claim 1 or 2, thereby indicates that the aluminium phosphinate is present as aluminium dialkylphosphinate and preferably as aluminium diethylphosphinate.

4. Aqueous polymer dispersion according to any one of claims 1 to 3, wherein characterized that the dispersed polymer is an acrylate polymer or a polyurethane polymer, preferably a polyurethane polymer.

5. Aqueous polymer dispersion according to any one of the preceding claims, **characterized in that** the dispersed polymer is an aliphatic
Polyurethane is the preferred polyether units.

6. Aqueous polymer dispersion according to any of the preceding claims, **characterized in that** the foam stabilizer is in the form of ionic or non-ionic surfactants, wherein preferentially
at least one part of the foam stabilizer is formed by an anionic surfactant.

7. Aqueous polymer dispersion according to any of the preceding claims,
**characterized by** the fact that the dispersion is present as a foam with a gas content in the range of 10 to 65 vol.-% and preferably 25 to 55 vol.-%.

8. Aqueous polymer dispersion according to any of the preceding claims,
**characterized by** the fact that the dispersion is free of halogenated flame retardants.

9. An aqueous polymer dispersion according to any of the preceding claims,
**characterized in that** the dispersion contains one or more crosslinkers selected from the group comprising isocyanate, carbodiimide and epoxy crosslinkers, and/or one or more additives selected from fillers, in particular mineral and/or biobased fillers, thickeners, rheology aids, pH-regulating agents, anti-aging agents and pigments.

10. Aqueous polymer dispersion according to any of the preceding claims,
where the dispersion has a pH value in the range of 5 to 10 and prefers 6 to 9.

11. Composite structures with several layers, **characterised in that**
at least one of the layers is formed by solidification of an aqueous polymer dispersion according to at least one of claims 1 to 10.

12. A composite structure according to claim 11 comprising a grained surface layer, a The layer of solidified foam and a textile layer on the side of the composite system opposite to the surface layer, wherein the layer of solidified foam is formed of an aqueous polymer dispersion according to at least one of claims 1 to 10.

13. A composite structure according to claim 11 or 12 having a combustion rate according to FMVSS 302 of less than 50 mm/min, with the proportion of the flame retardant in the layer formed from the aqueous dispersion preferably being less than 30% by weight.

14. Method for the production of a composite structure in accordance with at least one of claims 11 to 13, wherein an aqueous polymer dispersion according to at least one of claims 1 to 10, preferably in the form of a foam, is applied to a substrate and solidified into a continuous layer.

15. Use of a flame retardant combination containing melamine cyanurate
and an aluminium phosphinate, preferably in the form of aluminium diethylphosphinate, in a solidified foam layer formed from a polymer dispersion or solution to reduce the thickness shrinkage of the foam layer.

16. Use of a composite according to any one of claims 11 to 13
for the production of clothing, as a furniture cover or in architectural applications.

## Revendications

1. Dispersion aqueuse des polymères complète
- un polymère dispersé
- un stabilisateur en mousse et
- un mélange ignifuge contenant du cyanurate de mélamine et un phosphinate d'aluminium.

2. Dispersion aqueuse des polymères selon l'affirmation 1, **caractérisée par**
qu'elle a une teneur en retardateur de flamme comprise entre 10 et 30 % en poids, de préférence entre 12 et 25 % en poids, et de préférence entre 15 et 20 % en poids.

3. Dispersion aqueuse du polymère selon la revendication 1 ou 2, donc
indique que le phosphinate d'aluminium est présent sous forme de dialkylphosphinate d'aluminium et de préférence sous forme de diéthylphosphinate d'aluminium.

4. Dispersion aqueuse du polymère selon l'une des revendications 1 à 3, dans laquelle On a constaté que le polymère dispersé est un polymère acrylate ou polyuréthane, de préférence polyuréthane.

5. Dispersion aqueuse du polymère selon l'une des affirmations précédentes, **caractérisée en ce que** le polymère dispersé est un aliphatique
Le polyuréthane est l'unité polyéther préférée.

6. Dispersion aqueuse du polymère selon l'une des affirmations précédentes, **caractérisée par le fait que** le stabilisateur de mousse est sous forme de tensioactifs ioniques ou non ioniques, préférentiellement
au moins une partie du stabilisateur de mousse est constituée d'un tensioactif anionique.

7. Dispersion aqueuse des polymères selon l'une des revendications précédentes, **caractérisée par le fait que** la dispersion se présente sous forme de mousse avec une teneur en gaz comprise entre 10 et 65 % de vol., et de préférence 25 à 55 %.

8. Dispersion aqueuse des polymères selon l'une des affirmations précédentes, **caractérisée par le fait que** la dispersion est exempte de retardateurs de flamme halogénés.

9. Une dispersion aqueuse de polymère selon l'une des affirmations précédentes, **caractérisée par** la dispersion contenant un ou plusieurs réticulants sélectionnés parmi le groupe comprenant des réticulateurs isocyanate, carbodiimide et époxy, et/ou un ou plusieurs additifs sélectionnés à partir de charges de remplissage, en particulier des charges minérales et/ou bio-base, épaississants, aides rhéologiques, agents régulateurs du pH, agents anti-âge et pigments.

10. Dispersion aqueuse des polymères selon l'une des affirmations précédentes,
où la dispersion a une valeur de pH comprise entre 5 et 10 et préférera 6 à 9.

11. Structures composites à plusieurs couches, **caractérisées par** ce
au moins une des couches est formée par solidification d'une dispersion aqueuse polymère selon au moins une des revendications 1 à 10.

12. Une structure composite selon l'affirmation 11 comprenant une couche de surface granulée, un La couche de mousse solidifiée et une couche textile sur le côté opposé du système composite à la couche de surface, où la couche de mousse solidifiée est formée d'une dispersion aqueuse polymère selon au moins une des revendications 1 à 10.

13. Une structure composite selon la revendication 11 ou 12 ayant un taux de combustion selon FMVSS 302 de moins de 50 mm/min, avec une proportion de retardateur de flamme dans la couche formée par la dispersion aqueuse étant de préférence inférieure à 30 % en poids.

14. Méthode pour la production d'une structure composite conformément à au moins une des revendications 11 à 13, où une dispersion aqueuse du polymère selon au moins une des revendications 1 à 10, de préférence sous forme de mousse, est appliquée sur un substrat et solidifiée en une couche continue.

15. Utilisation d'une combinaison ignifuge contenant du cyanurate de mélamine
et un phosphinate d'aluminium, de préférence sous forme de diéthylphosphinate d'aluminium, dans une couche de mousse solidifiée formée à partir d'une dispersion ou d'une solution polymère pour réduire le rétrécissement de l'épaisseur de la couche de mousse.

16. Utilisation d'un composite selon l'une des revendications 11 à 13
pour la production de vêtements, comme housse de mobilier ou dans des applications architecturales.
